# EUROPEAN PATENT APPLICATION

(11) **EP 2 813 418 A1**
(43) Date of publication of application: **17.12.2014**
(21) Application number: 13747160.3
(22) Date of filing: 06.02.2013
(51) Int. Cl.: B62J 11/00

(54) **REFRESHMENT DEVICE FOR CYCLISTS**

(30) Priority: 06.02.2012 ES 201200099
(71) Applicant: Martínez Dorado, Isidoro, 36770 O Rosal (Pontevedra) (ES)
(72) Inventor: Martínez Dorado, Isidoro, 36770 O Rosal (Pontevedra) (ES)
(74) Representative: Garcia-Cabrerizo y del Santo, Pedro Maria
(86) International application number: PCT/ES2013/000027
(87) International publication number: WO 2013/117781

(57) **Abstract**

The invention relates to a device that has been specially designed to enable cyclists to drink water or a refreshment liquid in a more comfortable manner. The invention comprises a bottle including an inner tube (3) having an outer tube coupled thereto. The liquid is sucked through the outer tube using a nozzle (5) provided on the free end of said outer tube. The bottle is secured to a mounting (6) in the form of an open cylinder that clamps and secures the bottle by means of a lower extension, said mounting being secured to the handlebar tube and the stem tube of the bicycle by means of a clamp or omega half-clamps (10), the ends of which optionally define two hooks (11) to which an element such as a rubber band or the like is connected, said element clamping the handlebar in order to secure the assembly.

## Description

### Subject matter of the invention

The present invention relates to a refreshment device for cyclists, specifically to enable cyclists to drink liquid in a comfortable manner while cycling, during competitions or otherwise.

### Background of the invention

The applicant is likewise the holder of a Spanish Utility Model which describes a device for supplying liquid provisions to cyclists, focusing on the fact that inside the corresponding bottle for containing liquid, a tube has been arranged, which is coupled in a leak-tight manner to the corresponding lid of the bottle, to the coupling of which a nozzle is in turn coupled, which corresponds to a second tube, in this case on the outside, with a spiral-rolled portion, and which is arranged upon the handlebar stem, this spiral portion ending in a nozzle for the cyclist to suck.

The bottle is secured in a mounting that is duly fastened to the frame of the bicycle.

As a result of the spiral shape of the outer portion of tube, the cyclist can drink the liquid through the nozzle provided on said spiral portion by simply taking this nozzle into their mouth, since the spiral tube can of course extend and then recoil as soon as it is no longer in use, i.e. when it is released or when the liquid is no longer being consumed.

The problem with this device is that the bottle is situated too low down, since it is secured to the frame tube that is located below the handlebar stem, such that the spiral tube must be excessively long.

### Description of the invention

The recommended device has been envisaged to optimally resolve the problems presented above, such that, while including a bottle as discussed in the above Utility Model, with an inner tube and another outer tube, all of which is held in a mounting, the novelty is that the mounting in question is envisaged to be fastened to the handlebar and to the stem or goose neck thereof, and not to the frame of the bicycle. Said mounting constitutes an open circular body that clamps the bottle and secures it by means of a lower extension of the mounting itself, such that the base of the bottle rests upon this lower branch, and remains secured owing to the cylindrical and open shape of the rest of the mounting, with the special unique feature that this mounting is fastened to the handlebar by means of a sort of clamp or half-clamp, the ends of which may optionally be bent outwards in the shape of an "Ω", there being hook-shaped ends to which a rubber band is coupled as the fastening element proper, as it connects, through slots or holes provided therein, to the end hooks of the half-clamp, thus wrapping around the handlebar tube, the mounting with the bottle thus being secured at the same height as the handlebar.

Another feature is that the spiral tube is shorter since the cyclist's mouth will of course be closer to the bottle, as the latter is located at the height of the handlebar. Thus, the spiral portion lacks the straight portion which it had in the device of the previous Model, said spiral portion having a high spring back capacity, so that as soon as it is released, it adapts in a spiral shape to the outer surface of the bottle lid, which takes place immediately upon release of said spiral portion equipped with the nozzle for sucking the liquid.

As such, the end and the drinking tube are continuously accessible and the spiral tube need only be released in order to fit to the lid of the bottle.

This tube may also be a resilient and likewise extendable tube and/or a semi-rigid pull-out tube that enters and exits the inside of the container, with a pull-out stop, and inside of which there is another spiral or resilient tube, which is the one that makes it possible to raise or lower the pull-out tube and suck the liquid from inside the container.

### Description of the drawings

As a complement to the description provided herein, and for the purpose of helping to make the characteristics of the invention more readily understandable, in accordance with a preferred practical embodiment thereof, said description is accompanied by a set of figures constituting an integral part of the same, which by way of illustration and not limitation represent the following:

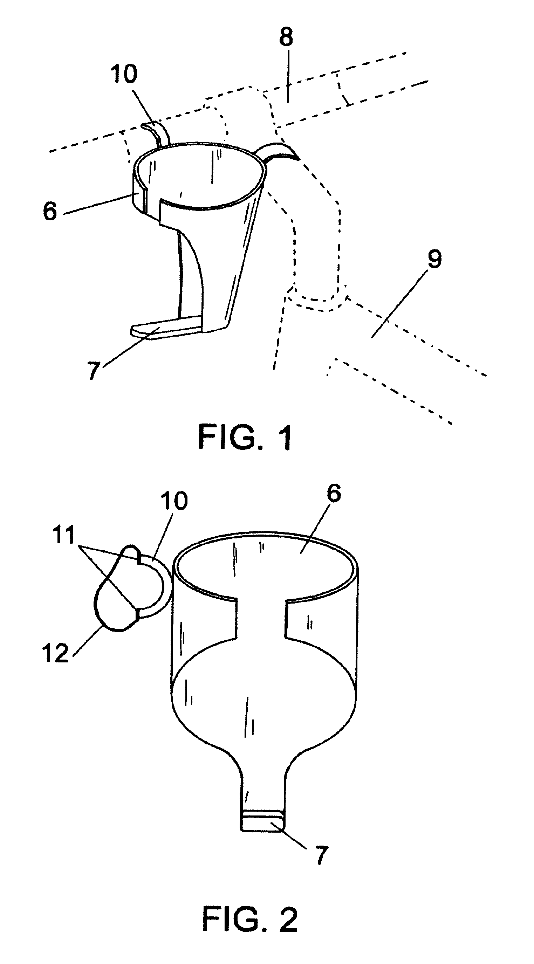

Figure 1.- Shows a representation from a general viewpoint of the front portion of a bicycle frame, and, on the handlebar, the corresponding mounting that makes up part of the invented refreshment device for cyclists.
Figure 2.- Shows a perspective view of the mounting represented in the preceding figure, in combination with a rubber band for securing it upon the handlebar.
Figure 3.- Shows a side elevation view of the mounting represented in the preceding figure.
Figure 4.- Shows a perspective view of a refreshment bottle having the spiral portion rolled up upon the outer surface of the corresponding lid.
Figure 5.- Shows, last of all, a plan view of how the portion with the sucking nozzle ends up being situated and rolled up in a spiral.

### Preferred embodiment of the invention

As may be seen in the aforementioned figures, the invented refreshment device for cyclists comprises, as is the convention, a bottle (1) for containing a liquid, with its corresponding lid (2), wherein the inside of the bottle (1) incorporates a tube (3) through which the liquid contained in the bottle (1) may be sucked, by means of an outer spiral tube (4) that ends in a sucking nozzle (5).

The aforementioned assembly is then arranged upon a mounting (6) with a cylindrical open portion for housing and adapting by resilience, thus clamping the bottle (1), which remains secured by resting its base on a lower, horizontal extension (7) of said mounting (6).

Thus, the first novel invented feature is that the mounting (6), in addition to its special design, is mounted upon the corresponding handlebar (8) of the bicycle (9), being secured or fastened by means of a clamp or half-clamps (10) provided laterally and externally upon the mounting (6), each of them ending in hooks (11), because of the fact that this half-clamp (10) is shaped like an "Ω", such that the ends, which project outwards, form said hooks (11) to which a rubber band (12) is to be fastened, which may be a folded ring, or a rubber band, the ends of which are provided with holes or slots for fastening to the ends in the form of hooks (11), thus clamping to the handlebar (8) tube and the stem or gooseneck tube thereof, the mounting (6) thus being securely fastened upon said handlebar (8). The ultimate aim is to secure the mounting to the handlebar and stem, meaning that any similar fastening system would be valid.

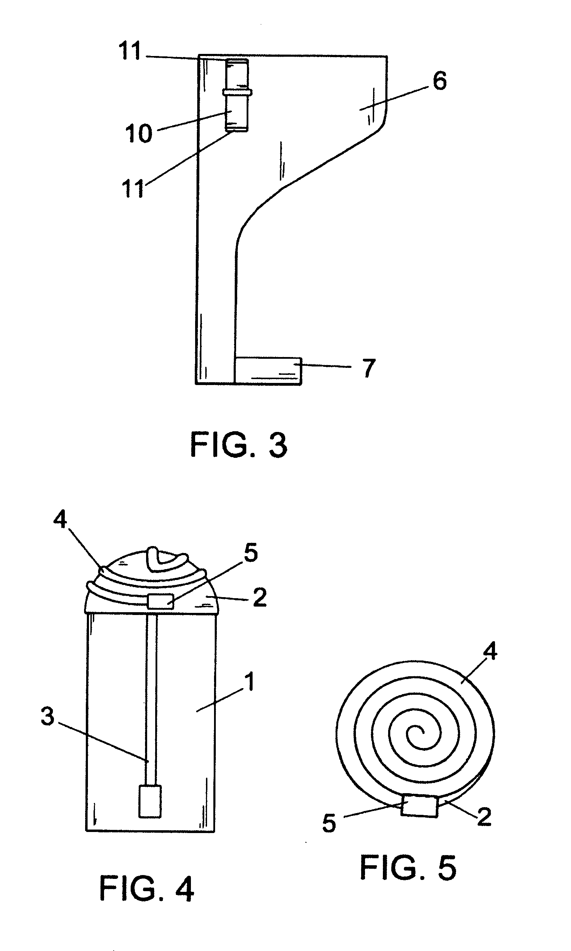

As a result of the arrangement of the mounting (6) upon the handlebar (8), and therefore of the bottle (1) for containing the liquid, the cyclist will always have said bottle nearby and can therefore suck the liquid by simply taking into their mouth the nozzle (5) of the spiral conduit or tube (4), which has the special feature of being made of a material having a high spring back capacity, so that as soon as it is released, it adapts perfectly into a spiral shape upon the outer surface of the lid (2), as is clearly represented in figures 4 and 5.

## Claims

1. A refreshment device for cyclists, comprising a bottle for containing a liquid, with an inner tube to which another outer tube is coupled, through which the liquid is sucked by means of a nozzle provided on the free end of said outer tube, and wherein the bottle remains secured upon a mounting, **characterized in that** said mounting has a shape in the form of an open cylinder that clamps and secures the bottle itself by means of a lower extension, said mounting being secured to the handlebar tube and the stem or gooseneck tube of the bicycle by means of a clamp or half-clamps in the shape of an "Ω", the ends of which optionally define two hooks to which an element such as a rubber band or the like is connected, which clamps the handlebar in order to secure the assembly; it being provided that the portion ending in the sucking nozzle is spiral-shaped, with a short length and high spring back capacity, adapting to the outer surface of the lid as soon as it is released, or with the variant of incorporating a flexible, stretchable tube, that may be pulled out in the final portion that leads to the nozzle, even if it dispenses with the spiral shape.
